# EUROPEAN PATENT SPECIFICATION

(11) **EP 4 257 911 B1**
(45) Date of publication and mention of the grant of the patent: **11.06.2025**
(21) Application number: 22166908.8
(22) Date of filing: 06.04.2022
(51) Int. Cl.: F28F 1/12, F01N 5/02, F28D 7/08, F28D 9/00, F28D 21/00, F28F 1/22, F28F 1/32

(54) **HEAT EXCHANGE MODULE**
WÄRMEAUSTAUSCHMODUL
MODULE D'ÉCHANGE DE CHALEUR

(43) Date of publication of application: 11.10.2023
(73) Proprietor: Volvo Car Corporation, 40531 Göteborg (SE)
(72) Inventor: Rolandson, Ola, 46890 Vänersnäs (SE)
(74) Representative: Nederlandsch Octrooibureau

(56) References cited:
- SE-B- 355 233
- US-A1- 2016 327 348
- US-B2- 8 291 892

## Description

### Technical Field

The disclosure relates to a heat exchange module comprising a corrugated top heat exchange substrate and a corrugated bottom heat exchange substrate, the substrates being spaced apart in a transverse direction, each substrate having ridges and channels that extend in a length direction, the channels and ridges of the top substrate extending parallel to the channels and ridges of the bottom substrate.

The disclosure also relates to an assembly of such heat exchange modules, to a catalyst/steam reforming assembly in a vehicle with an internal combustion engine (ICE), and to a vehicle with an internal combustion engine comprising such a catalyst/steam reforming assembly. SE355233B discloses a room heater consisting of a pipe system arranged in a substantially vertical plane for passing through a heat emitting medium and partly in good heat conducting contact with the pipe system, which forms vertical air ducts, and partly a pipe system and the secondary elements facing the room side covering. US8291892B2 discloses heat exchangers, including exhaust gas coolers for use in vehicles and to a method of making heat exchangers. US2016/327348A1 discloses a corrugated fin for dissipating heat of a heat exchange medium in a heat exchanger such as a radiator, an oil cooler or an after-cooler.

### Background

Fuel Reforming technology that uses the heat available in the exhaust to upgrade ethanol fuel to a higher energy level hydrogen fuel is applied in the combustion engines with higher thermal efficiency for the ICE as a result.

To manufacture the heat exchanger with different pressures and tightness requirements for the two sides is a challenge.

Another challenge is to stack and assemble the components in the correct position for a rapid and reliable automated process of welding or soldering of the pipes.

A third challenge is to manage the thermal expansion on both sides of the heat exchanger without introducing tension that may lead to cracks.

It is an object to solve these issues and to provide a heat exchange module that enables cheaper automatic production in higher volumes. It is also an object to provide a heat exchanger that can accommodate thermal expansion and contraction that occurs in process involving temperatures above 4000C that are subject to rapid variations, so that it can be used in the high temperature process of steam reforming and that has good tightness properties for H2. The heat exchanger should be compact and sturdy so that it is suitable for automotive applications.

Furthermore, the heat exchanger should be easily adaptable to provide the required capacity. It is again an object to provide a vehicle with an internal combustion engine (ICE) having an ethanol fuel reformer comprising one or more heat exchanger modules according to the invention.

### Summary

A heat exchange module according to the disclosure comprises tubes extending in a width direction between the top and bottom substrates, in heat exchanging contact with the ridges, the width direction being oriented transversely to the length direction of the channels and the ridges, from an inflow side to an outflow side,
a top and a bottom casing member comprising casing surfaces adjacent the top and bottom substrates and having at the inflow and outflow sides a transverse side wall with slits oriented in the transverse direction and accommodating the tubes,
the side walls of the top and bottom casing members overlapping and being mutually connected by soldering or brazing.

The tubes can accommodate thermal expansion and contraction while maintaining fluid tightness.

The tubes are maintained clamped between the top and bottom corrugated substrates and can freely mover relative to the substrates so that thermal expansion and contraction of the different components is allowed while maintaining good heat transfer contact.

The tubes maintain secure fluid tightness at high and varying temperatures and pressures. This makes the module suitable for use in an ethanol steam reformer, to operate at temperatures between 400⁰C and 1000⁰C.

The slits in the casing side walls, which may be formed of sheet metal, receive the tubes in a high-speed automated assembly process, and align the tubes in accurately defined positions. The slits can effectively be sealed by welding or soldering to seal the passage of each tube through the side wall.

The overlapping side walls of the casing members result in gas-tight connection by welding or soldering.

The modules according to the disclosure can be stacked and combined to form a heat transfer unit that is suited for specific applications, such as a combined three-way catalyst and steam reforming unit for ethanol for use in vehicles comprising an internal combustion engine.

substrates may be connected to a casing member along a casing side edge that is situated along a lower part of a respective casing side wall.

By welding or brazing the substrates along their edges to the side walls of the casing, a strong and reliable interconnection is obtained allowing sufficient relative movement between the casing and the substrate for accommodating thermal expansion while maintaining a defined position.

The tubes at the position of the transverse side walls may have a straight section extending in the width direction, transversely to the side walls.

The straight end parts of the tubes allow strong and fluid tight connection of the tube exterior to the slits in the side walls, which is particularly suitable in cases the heat exchange module is used in applications in which hydrogen is present in the module.

The slits in the side walls can comprise at their free end a V-shaped receiving part for guiding of the tubes upon placement of the tubes in the slits.

The V-shaped receiving part centers the tubes on placing in the slits and facilitates automated positioning and welding/brazing at high speeds.

The tubes may extend along an undulating trajectory with undulations in the width direction.

The undulating path of the tubes causes turbulence in the gases flowing over and under the tubes in crossflow, and results in improved heat transfer.

The undulating trajectory comprises bend parts at a distance from a line that is parallel to the width direction, a distance of the two adjacent undulations being between 1.5 and 5 times a width of a channel.

The dimensions of the undulations in the pipe allow specific tailoring of the contact area for heat transfer between the pipe and the corrugated substrates. A larger area towards the gases flowing through the channels may balance the inner surface area that is in contact with the contents of the tubes. This ratio can be established using tests or CFD to work at peak efficiency for both sides of the heat exchanger.

The position of the ridges of the upper substrate in the width direction may correspond to the position of the channels of the lower substrate.

The tubes are firmly clamped between the ridges of the upper and lower substrate for obtaining good positioning and heat transfer while allowing sufficient relative movement for accommodating thermally induced movements.

The substrates may be coated with a platinum group metal.

In addition to the substrates, that may act as a three-way catalyst (TWC), the tubes may be coated with a platinum-group metal (PGM) to activate the reforming process. The coating of the tubes may have a different specification of PGM than the TWC substrate.

The modules of the disclosure can be formed into an assembly of at least two modules stacked on top of each other, the bottom surface of the upper casing member being soldered or brazed to the top surface of the lower casing member.

A combined catalyst/steam reforming assembly may be formed, comprising a heat exchange module according to disclosure, exhaust gases being led through the channels and ethanol and steam through the tubes.

A vehicle may be provided comprising an internal combustion engine with cylinders that are connected to a fuel inlet and to an exhaust outlet, the exhaust outlet being in fluid contact with a catalyst/steam reforming assembly, such that exhaust gases flow through the channels, an evaporator that is in heat exchanging contact with the exhaust gases, a water and ethanol supply unit flowing water and ethanol through the evaporator for forming water and ethanol steam, the water and ethanol steam being passed into the tubes, and a reformed fuel duct connected to an outflow side of the tubes and being connected to a fuel inlet of the cylinders.

The heat exchange module according to the disclosure provides a compact and stable combined catalyst/ steam reforming unit for the treatment of exhaust gases and for forming H₂ from ethanol, such as from bio-fuel, in automotive applications.

### Brief Description of the Drawings

A heat exchange module according to the disclosure will, by way of non-limiting example, be described in detail with reference to the accompanying drawings. In the drawings:
Fig. 1 shows a perspective view of a stack of heat exchange modules,
Fig. 2 shows a perspective view of a side section of a heat exchange module,
Fig. 3 shows a detail of tubes being received in slits in the sidewalls,
Fig. 4 shows a perspective view of the tubes and a bottom heat exchange substrate and casing member,
Fig. 5 shows a plan view of the tubes and the heat exchange substrate,
Fig. 6 shows the flow of gases around the tubes of the heat exchange module, and
Fig. 7 shows an embodiment of a vehicle comprising an ethanol reforming unit comprising heat exchange modules according to the disclosure.

### Detailed Description

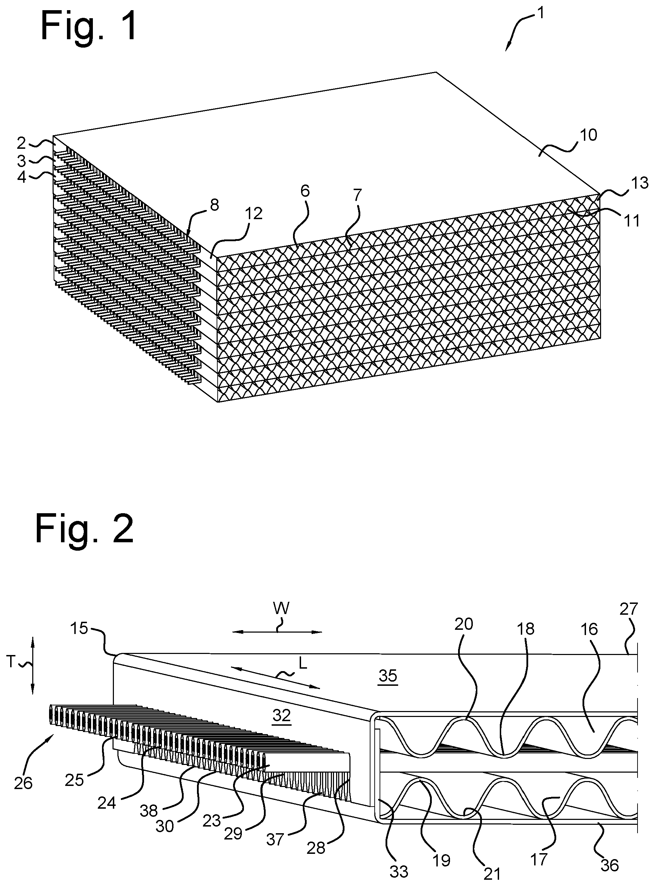

Figure 1 shows a stack 1 of interconnected heat exchange modules 2, 3, 4, each module comprising two spaced-apart corrugated heat exchange substrates 6, 7 with tubes 8 extending in heat exchanging contacting relationship between the substrates. The substrates 6,7 and tubes 8 are encased between top and bottom casing members 10, 11, the casing members having overlapping side walls 12, 13 that are interconnected by brazing or soldering.

As can be seen in figure 2, the top and bottom heat exchange substrates 16,17 have ridges 19, 20 and channels 18, 21 that extend in the length direction Lather tubes 23, 24, 25 extend transversely to the ridges 19, 20 and channels 18, 21 in the width direction W from an inflow side 26 to an outflow side 27 and are clamped between the opposing ridges and channels 18, 19 of the top and bottom heat exchange substrates 16, 17. The tubes 23, 24, 25 pass through the slits 28, 29, 30 in the overlapping sidewalls 32, 33 of the casing members 35, 36. Each slit 28, 29, 30 has a V-shaped end part 37, 38 in which the tubes 23-26 are received and oriented during automated positioning. The tubes 23, 24, 25 are soldered into the slits 28-30 to form a gas-tight enclosure within the casing members 35, 36. The sidewalls 32, 33 are joined in a gas-tight manner by soldering in an overlapping position along their perimeter.

The heat exchange substrates 16,17 are brazed against the lower edges of the sidewall 33 so that the corrugated parts can slide with respect to the casing members 35, 36 while being kept firmly in place.

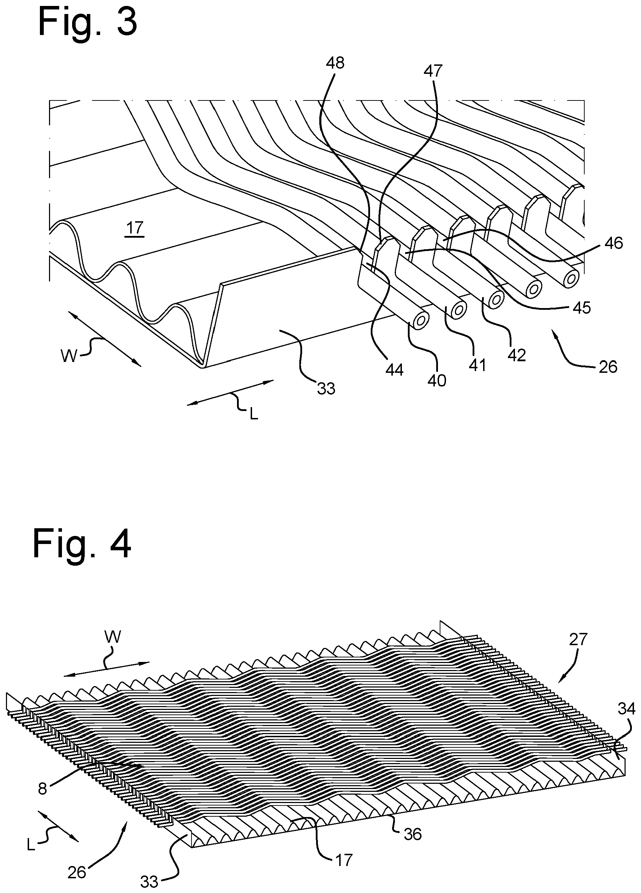

Figure 3 shows a detail of the tubes 40,41,42 passing through the sidewall 33 via slits 44,45,46 with a V-shaped end part having slanting edges 47, 48. The tubes 40, 41, 42 extend along an undulating path in the width direction W in heat conducting contact with the heat exchange substrate 17. At the position of the sidewall 33, the tubes 8 extend along a straight line to allow easy handling upon insertion into the slits 44, 45, 46 and easy and accurate automated positioning.

Figure 4 shows a perspective view of the lower casing member 36 and heat exchange substrate 17, with the tubes 8 supported by the sidewalls 33, 34 and extending from an inflow side 26 to an outflow side 27. A number of 30-500 tubes may be accommodated in the arrangement shown. The undulating path of the tubes causes turbulence of the gases flowing in the length direction L, over and under the tubes, through the channels of the heat exchange substrates for improved heat transfer.

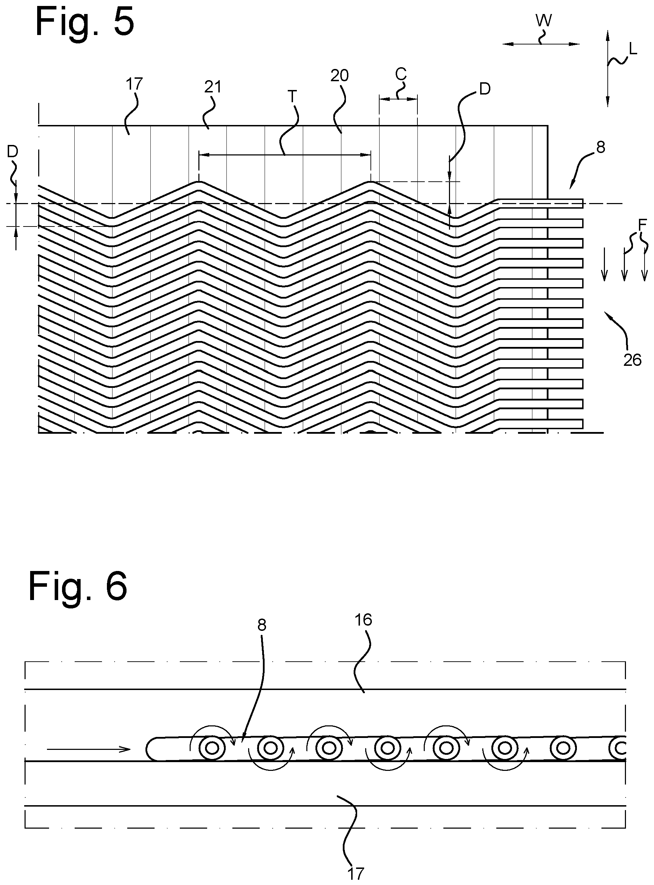

Figure 5 shows the width C of the channels 20,21 and the amplitude D and period T of the undulating tubes 8. The values of C, D and T are carefully tuned to result in optimal heat transfer of gases flowing through the channels 20,21 in the direction F, and a fluid substance flowing through the tubes 8 in a crossflow manner. C:D: T may be about 1:1:5.

Figure 6 shows the flow of gases flowing through the channels of the upper and lower heat exchange substrates 16, 17 while passing over and under the tubes 8. The turbulent flow pattern results in good heat exchange properties.

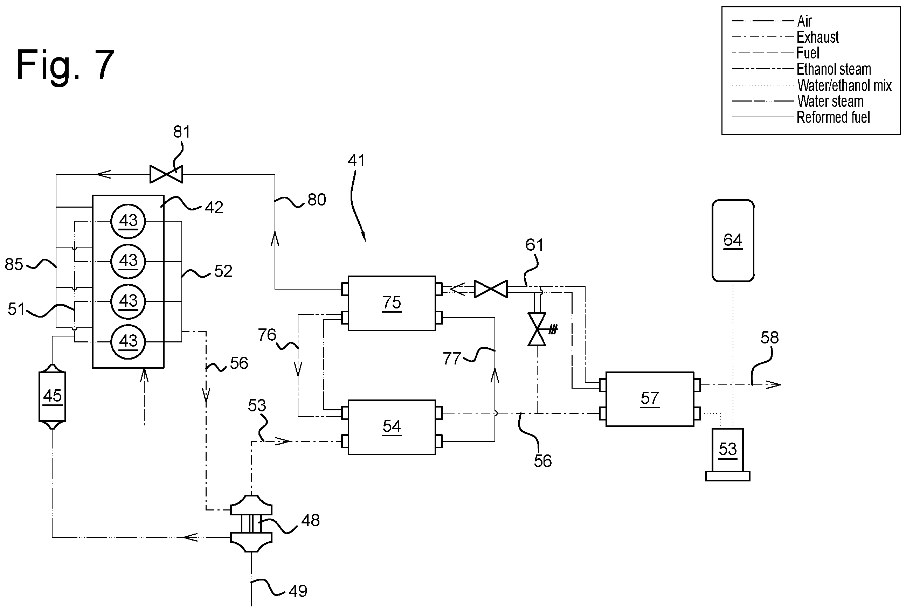

Figure 7 shows an internal combustion engine assembly 41 with an internal combustion engine 42 having four cylinders 43. A fuel inlet 44 supplies a fuel, that may contain bio-ethanol, for instance in the form of an E10, to the cylinders 43.

A turbocharger 48 compresses the air that is supplied from an air intake 49 and transports the intake air through a cooler 45 to the intake manifold 51 for supply to the cylinders 43. The exhaust gases of the fuel that has been burned in the cylinders 43, leave the engine 42 via an exhaust manifold 52 and flow through an exhaust duct 56 to drive the turbocharger 48. After passing through the turbocharger 48, the exhaust gases flow via the duct 53 into an integrated catalytic converter/fuel reformer unit 54 that is formed from stacked heat exchange modules that are described in figures 1 to 4. Via an exhaust duct 56, the exhaust gases pass to an ethanol evaporator 57 and from there via exhaust duct 58 to a tail pipe to be expelled into the ambient.

A pump 63 is connected to a water/ethanol tank 64 and supplies water and ethanol from the tank 64 to the evaporator 57 where the water/ethanol, that is at ambient temperature, is brought in heat exchanging contact with the exhaust gases. The ethanol steam and water steam that is produced in the evaporator 57, is supplied via a duct 61 to a pre-heater/cooler unit 75.

The pre-heated water steam and ethanol steam mixture is fed from the unit 75 to the integrated catalytic converter/fuel reformer unit 54 through duct 76, where the water and steam are flowing through the tubes 8 shown in figures 1-4, of the reformer unit 54, to be reformed into syngas. The exhaust gases flow through the channels of the heat exchange substrates. The tubes 8 may be coated with a PGM to activate the reforming process. The coating of the tubes may have a different specification of PGM than the coating of the heat exchange substrate, that forms a TWC for the removal of NOx and hydrocarbons from the exhaust gases.

The exhaust gases flow from the duct 53 in the reformer unit 54 through the channels 20,21 of the top and bottom heat exchange substrates 6,7; 16,16 that are shown in figures 1 and 2.

The syngas that is formed in the integrated catalytic converter/fuel reformer unit 54 is transported via a syngas outlet duct 77, through the pre-heater/cooler unit 75 and preheats the water and ethanol by being brought in heat exchanging contact with the water/ethanol steam that is supplied at the inlet of the unit 75.

Via an outlet duct 80 and a reduction valve 81, the syngas is supplied to a gas inlet ma47nifold 85 that is connected to the cylinders 3.

## Claims

1. Heat exchange module (2, 3, 4) comprising:
a corrugated top heat exchange substrate (6) and a corrugated bottom heat exchange substrate (7), the substrates being spaced apart in a transverse direction (T), each substrate having ridges (19, 20) and channels (18, 21) that extend in a length direction (L), the channels (18) and ridges (20) of the top substrate (6) extending parallel to the channels (21) and ridges (19) of the bottom substrate (7),
tubes (8; 23, 24, 25) extending in a width direction (W) between the top and bottom substrates (6, 7), in heat exchanging contact with the ridges (19,20), the width direction (W) being oriented transversely to the length direction (L) of the channels and the ridges, from an inflow side (26) to an outflow side (27),
a top and a bottom casing member (35, 36) comprising casing surfaces adjacent the top and bottom substrates (6, 7)
**characterized in that** said top and bottom casing members (35, 36) having at the inflow and outflow sides (26, 27) a transverse side wall (32, 33, 34) with slits (28, 29, 30) oriented in the transverse direction (T) and accommodating the tubes (8; 23, 24, 25),
the side walls (32, 33) of the top and bottom casing members (35, 36) overlapping and being mutually connected by soldering or brazing.

2. Heat exchange module (2, 3, 4) according to claim 1, each substrate (6, 7) being connected to a casing member (35, 36) along a casing side edge that is situated along a lower part of a respective casing side wall (33,34).

3. heat exchange module (2, 3, 4) according to claim 1 or 2, the tubes (8; 23, 24, 25) at the position of the transverse side walls (32, 33, 34) having a straight section extending in the width direction (W), transversely to the side walls (32, 33, 34).

4. Heat exchange module (2, 3, 4) according to any of the preceding claims, the slits (28, 29, 30) in the side walls (32, 33, 34) comprising at their free end a V-shaped receiving part (37,38) for guiding of the tubes (8; 23, 24, 25) upon placement of the tubes in the slits (28, 29, 30).

5. Heat exchange module (2, 3, 4) according to any of the preceding claims, the tubes (8; 23, 24, 25) extending along an undulating trajectory with undulations in the width direction (W).

6. Heat exchange module (8; 23, 24, 25) according to any of the preceding claims, the undulating trajectory comprising bend parts at a distance (D) from a line that is parallel to the width direction (W), a distance (T) of the two adjacent undulations being between 1.5 and 5 times a width (C) of a channel (18,21).

7. Heat exchange module (2, 3, 4) according to any of the preceding claims, the position of the ridges (19) of the upper substrate (16) in the width direction (W) corresponding to the position of the channels (21) of the lower substrate (21).

8. Heat exchange module (2, 3, 4) according to any of the preceding claims, the substrates (6,8) being coated with a platinum group metal.

9. Assembly (1) of at least two modules (2,3,4) according to any one of the preceding claims stacked on top of each other, the bottom surface of the upper casing member being soldered or brazed to the top surface of the lower casing member.

10. Catalyst/Steam reforming assembly (54) comprising a heat exchange module (2, 3, 4) according to the any of the preceding claims, exhaust gases being led through the channels (18, 21) and alcohol and steam through the tubes (8; 23, 24, 25).

11. Vehicle comprising
a combustion engine with cylinders (43) that are connected to a fuel inlet (85) and to an exhaust outlet (52), the exhaust outlet being in fluid contact with a catalyst/steam reforming assembly (54) according to claim 10, such that exhaust gases flow through the channels (18,21),
an evaporator (57) that is in heat exchanging contact with the exhaust gases,
a water and ethanol supply unit (64) flowing water and ethanol through the evaporator (57) for forming water and ethanol steam, the water and ethanol steam being passed into the tubes (8; 23, 24, 25), and
a reformed fuel duct (81) connected to an outflow side (27) of the tubes and being connected to a fuel inlet (85) of the cylinders (43).

## Patentansprüche

1. Wärmeaustauschmodul (2, 3, 4), das Folgendes umfasst:
ein gewelltes oberes Wärmeaustauschsubstrat (6) und ein gewelltes unteres Wärmeaustauschsubstrat (7), wobei die Substrate in einer Querrichtung (T) beabstandet sind, wobei jedes Substrat Erhöhungen (19, 20) und Kanäle (18, 21) aufweist, die sich in einer Längsrichtung (L) erstrecken, wobei sich die Kanäle (18) und Erhöhungen (20) des oberen Substrats (6) parallel zu den Kanälen (21) und Erhöhungen (19) des unteren Substrats (7) erstrecken, wobei sich Rohre (8; 23, 24, 25) in einer Breitenrichtung (W) zwischen dem oberen und dem unteren Substrat (6, 7) in Wärmeaustauschkontakt mit den Erhöhungen (19, 20) erstrecken, wobei die Breitenrichtung (W) quer zur Längsrichtung (L) der Kanäle und der Erhöhungen von einer Zuflussseite (26) zu einer Abflussseite (27) ausgerichtet ist,
ein oberes und ein unteres Gehäuseelement (35, 36), die Gehäuseoberflächen angrenzend an das obere und das untere Substrat (6, 7) aufweisen, **dadurch gekennzeichnet, dass** das obere und das untere Gehäuseelement (35, 36) an der Zufluss- und der Abflussseite (26, 27) eine Querseitenwand (32, 33, 34) mit Schlitzen (28, 29, 30) aufweisen, die in Querrichtung (T) ausgerichtet sind und die Rohre (8; 23, 24, 25) aufnehmen, wobei sich die Seitenwände (32, 33) des oberen und des unteren Gehäuseelements (35, 36) überlappen und durch Löten oder Hartlöten miteinander verbunden sind.

2. Wärmeaustauschmodul (2, 3, 4) nach Anspruch 1, wobei jedes Substrat (6, 7) entlang einer Gehäuseseitenkante, die entlang eines unteren Teils einer jeweiligen Gehäuseseitenwand (33, 34) liegt, mit einem Gehäuseelement (35, 36) verbunden ist.

3. Wärmeaustauschmodul (2, 3, 4) nach Anspruch 1 oder 2, wobei die Rohre (8; 23, 24, 25) an der Position der Querseitenwände (32, 33, 34) einen geraden Abschnitt aufweisen, der sich in der Breitenrichtung (W) quer zu den Seitenwänden (32, 33, 34) erstreckt.

4. Wärmeaustauschmodul (2, 3, 4) nach einem der vorhergehenden Ansprüche, wobei die Schlitze (28, 29, 30) in den Seitenwänden (32, 33, 34) an ihrem freien Ende ein V-förmiges Aufnahmeteil (37, 38) zum Führen der Rohre (8; 23, 24, 25) beim Platzieren der Rohre in den Schlitzen (28, 29, 30) umfassen.

5. Wärmeaustauschmodul (2, 3, 4) nach einem der vorhergehenden Ansprüche, wobei sich die Rohre (8; 23, 24, 25) entlang einer wellenförmigen Trajektorie mit Wellen in der Breitenrichtung (W) erstrecken.

6. Wärmeaustauschmodul (8; 23, 24, 25) nach einem der vorhergehenden Ansprüche, wobei die wellenförmige Trajektorie Biegungsteile in einem Abstand (D) von einer Linie umfasst, die parallel zu der Breitenrichtung (W) ist, wobei ein Abstand (T) der zwei benachbarten Wellen zwischen dem 1,5- und 5-fachen einer Breite (C) eines Kanals (18, 21) beträgt.

7. Wärmeaustauschmodul (2, 3, 4) nach einem der vorhergehenden Ansprüche, wobei die Position der Erhöhungen (19) des oberen Substrats (16) in der Breitenrichtung (W) der Position der Kanäle (21) des unteren Substrats (21) entspricht.

8. Wärmeaustauschmodul (2, 3, 4) nach einem der vorhergehenden Ansprüche, wobei die Substrate (6, 8) mit einem Metall der Platingruppe beschichtet sind.

9. Anordnung (1) aus mindestens zwei Modulen (2, 3, 4) nach einem der vorhergehenden Ansprüche, die übereinander gestapelt sind, wobei die untere Oberfläche des oberen Gehäuseelements an die obere Oberfläche des unteren Gehäuseelements gelötet oder hartgelötet ist.

10. Katalysator-/Dampfreformierungsanordnung (54), umfassend ein Wärmeaustauschmodul (2, 3, 4) nach einem der vorhergehenden Ansprüche, wobei Abgase durch die Kanäle (18, 21) und Alkohol und Dampf durch die Rohre (8; 23, 24, 25) geleitet werden.

11. Fahrzeug, das Folgendes umfasst:
einen Verbrennungsmotor mit Zylindern (43), die mit einem Kraftstoffeinlass (85) und mit einem Abgasauslass (52) verbunden sind, wobei der Abgasauslass in Fluidkontakt mit einer Katalysator-/Dampfreformierungsanordnung (54) nach Anspruch 10 steht, so dass Abgase durch die Kanäle (18, 21) strömen,
einen Verdampfer (57), der in Wärmeaustauschkontakt mit den Abgasen steht,
eine Wasser- und Ethanolzufuhreinheit (64), die Wasser und Ethanol durch den Verdampfer (57) zum Bilden von Wasser- und Ethanoldampf strömt, wobei Wasser- und Ethanoldampf in die Rohre (8; 23, 24, 25) geleitet werden, und
einen Kanal (81) für reformierten Kraftstoff, der mit einer Abflussseite (27) der Rohre verbunden und mit einem Kraftstoffeinlass (85) der Zylinder (43) verbunden ist.

## Revendications

1. Module d'échange de chaleur (2, 3, 4), comprenant :
un substrat d'échange de chaleur ondulé haut (6) et un substrat d'échange de chaleur ondulé bas (7), les substrats étant espacés l'un de l'autre dans une direction transversale (T), chaque substrat ayant des saillies (19, 20) et des gorges (18, 21) qui s'étendent dans une direction de longueur (L), les gorges (18) et les saillies (20) du substrat haut (6) s'étendant parallèlement aux gorges (21) et aux saillies (19) du substrat bas (7), des tubes (8 ; 23, 24, 25) s'étendant dans une direction de largeur (W) entre les substrats haut et bas (6, 7), en contact d'échange de chaleur avec les saillies (19, 20), la direction de largeur (W) étant orientée transversalement à la direction de longueur (L) des gorges et des saillies, depuis un côté d'écoulement entrant (26) jusqu'à un côté d'écoulement sortant (27),
des éléments d'enveloppe haut et bas (35, 36) comprenant des surfaces d'enveloppe adjacentes aux substrats haut et bas (6, 7), **caractérisé en ce que** lesdits éléments d'enveloppe haut et bas (35, 36) ont, sur les côtés d'écoulements entrant et sortant (26, 27), une paroi latérale transversale (32, 33, 34) avec des fentes (28, 29, 30) orientées dans la direction transversale (T) et logeant les tubes (8 ; 23, 24, 25), les parois latérales (32, 33) des éléments d'enveloppe haut et bas (35, 36) se chevauchant et étant mutuellement raccordés par soudage ou brasage.

2. Module d'échange de chaleur (2, 3, 4) selon la revendication 1, chaque substrat (6, 7) étant raccordé à un élément d'enveloppe (35, 36) le long d'un bord latéral d'enveloppe qui est situé le long d'une partie inférieure d'une paroi latérale d'enveloppe respective (33, 34).

3. Module d'échange de chaleur (2, 3, 4) selon la revendication 1 ou 2, les tubes (8 ; 23, 24, 25) à la position des parois latérales transversales (32, 33, 34) ayant une section droite s'étendant dans la direction de largeur (W), transversalement aux parois latérales (32, 33, 34).

4. Module d'échange de chaleur (2, 3, 4) selon de quelconques des revendications précédentes, les fentes (28, 29, 30) dans les parois latérales (32, 33, 34) comprenant, à leur extrémité libre, une partie de réception en forme de V (37, 38) pour le guidage des tubes (8 ; 23, 24, 25) lors du placement des tubes dans les fentes (28, 29, 30).

5. Module d'échange de chaleur (2, 3, 4) selon de quelconques des revendications précédentes, les tubes (8 ; 23, 24, 25) s'étendant le long d'une trajectoire ondulante avec des ondulations dans la direction de largeur (W).

6. Module d'échange de chaleur (8 ; 23, 24, 25) selon de quelconques des revendications précédentes, la trajectoire ondulante comprenant des parties de courbure à une distance (D) d'une ligne qui est parallèle à la direction de largeur (W), une distance (T) des deux ondulations adjacentes étant entre 1,5 et 5 fois une largeur (C) d'une gorge (18, 21).

7. Module d'échange de chaleur (2, 3, 4) selon de quelconques des revendications précédentes, la position des saillies (19) du substrat supérieur (16) dans la direction de largeur (W) correspondant à la position des gorges (21) du substrat inférieur (21).

8. Module d'échange de chaleur (2, 3, 4) selon de quelconques des revendications précédentes, les substrats (6, 8) étant enduits avec un métal de groupe platine.

9. Ensemble (1) d'au moins deux modules (2, 3, 4) selon l'une quelconque des revendications précédentes empilés l'un par-dessus l'autre, la surface basse de l'élément d'enveloppe supérieur étant soudée ou brasée à la surface haute de l'élément d'enveloppe inférieur.

10. Ensemble de reformage catalyseur/vapeur (54) comprenant un module d'échange de chaleur (2, 3, 4) selon les quelconques des revendications précédentes, des gaz d'échappement étant conduits à travers les gorges (18, 21) et de l'alcool et de la vapeur à travers les tubes (8 ; 23, 24, 25).

11. Véhicule, comprenant
un moteur à combustion avec des cylindres (43) qui sont raccordés à une entrée de carburant (85) et à une sortie d'échappement (52), la sortie d'échappement étant en contact fluidique avec un ensemble de reformage catalyseur/vapeur (54) selon la revendication 10, de manière telle que des gaz d'échappement s'écoulent à travers les gorges (18, 21),
un évaporateur (57) qui est en contact d'échange de chaleur avec les gaz d'échappement,
une unité d'alimentation en eau et éthanol (64) réalisant l'écoulement d'eau et d'éthanol à travers l'évaporateur (57) pour former de la vapeur d'eau et d'éthanol, le passage de la vapeur d'eau et d'éthanol étant entraîné dans les tubes (8 ; 23, 24, 25), et
un conduit de carburant reformé (81) raccordé à un côté d'écoulement sortant (27) des tubes et étant raccordé à une entrée de carburant (85) des cylindres (43).
